# EUROPEAN PATENT SPECIFICATION

(11) **EP 1 261 171 B1**
(45) Date of publication and mention of the grant of the patent: **19.03.2008**
(21) Application number: 02011464.1
(22) Date of filing: 24.05.2002
(51) Int. Cl.: H04L 12/28, H04L 12/56

(54) **Radio communication terminal having functions of master station or slave station**
Funkkommunikationsendgerät mit Master- oder Slavestationsfunktion
Terminal de communication radio ayant des functions de station maître ou de station esclave

(30) Priority: 25.05.2001 JP 2001156638
(43) Date of publication of application: 27.11.2002
(73) Proprietor: Pioneer Corporation, Meguro-ku, Tokyo (JP)
(72) Inventor: Yajima, Kiyoshi, Pioneer Corporation, Tsurugashima-shi, Saitama 350-2288 (JP); Sotomaru, Toshihiro, Pioneer Corporation, Tsurugashima-shi, Saitama 350-2288 (JP)
(74) Representative: Manitz, Finsterwald & Partner GbR

(56) References cited:
- EP-A- 1 024 628
- "Specification of the Bluetooth System PROFILES V1.0B" (GENERIC ACCESS, OBJECT PUSH), [Online] 1 December 1999 (1999-12-01), page 1,13,29-32,37-44,329,334-347 XP002248219 Retrieved from the Internet: <URL:www.bluetooth.org> [retrieved on 2003-07-18]

## Description

### BACKGROUND OF THE INVENTION

### 1. Field of the Invention

The present invention relates to a master station terminal and a slave station terminal used in a radio communications network in which a plurality of terminals communicate with each other according to the precharacterizing portion of claim 1, claim 4 and claim 5, respectively.

### 2. Description of the Related Art

So-called Bluetooth radio communications systems are generally known as systems in which a plurality of radio communication terminals form one radio communications network and in which communications links are established to transmit and receive signals in the radio communications network.

In a Bluetooth (hereinafter simply referred to as "BT") radio communications system, connection is established between terminal apparatuses located very close to each other, e.g., between a cellular phone and a notebook personal computer or between a stereo and a headphone with a radio communications link utilizing a very weak electric wave in a 2.4 GHz band to perform radio transmission of signals such as data and sounds.

In a BT system, so-called point-to-point signal transmission may be performed between BT information terminal apparatus (hereinafter simply referred to as "BT apparatus") incorporating a module satisfying BT specifications (hereinafter simply referred to as "BT module") in a one-to-one relationship. In general cases, however, one network is formed by a plurality of BT apparatuses, and signal transmission is performed between the plurality of BT apparatuses in the network. In BT systems, a so-called point-to-multipoint signal transmission network in such a one-to-n relationship is referred to as a "Piconet".

One Piconet can include eight BT apparatus at most. One of the BT apparatus is called "master", and the other BT apparatuses are called "slave". The master forms a BT radio communications link in the Piconet and controls other communication procedures. Each of the slaves can transmit signals only between the master and itself.

Functions of both of the master and slave are not functions that are uniquely defined for the BT modules incorporated in the respective BT apparatus. Each of the BT modules has both of those functions and can selectively use both of the functions as occasions demand. However, it always holds true that only one master exists in one Piconet.

Referring to a procedure for signal transmission between a master and a slave, a radio communications link based on the BT specifications is first formed between the BT modules of both apparatuses. Signals are then transmitted between the BT modules through the radio communications link. The signal transmission between the BT modules is performed in time slots (which are 625 µs in principle) on a time base on an axis of time. Both BT modules reciprocally use such time slots on a time division basis to perform transmission. In other words, the TDD (time division duplexing) method that is a type of half-duplex communication in which reception and transmission are reciprocally performed is employed for signal transmission between the master and the slave. In this connection, communication between BT modules for which a radio communications link has been established takes place at a maximum speed of 1 Mbps.

In a BT radio communications system, the frequency hopping type spread spectrum method is adopted as a method of modulation. Carrier wave frequencies according to a normal narrow-band modulation method are switched at short intervals in such a method of modulation, and such frequency switching is called frequency hopping. In a BT radio communications system, there are 79 hopping frequencies at frequency intervals of 1 MHz in the 2.4 GHz band. Since such frequency hopping takes place in each of the time slots (625 µm) described before, frequency hopping takes place 1600 times per second.

A hopping pattern represents an order in which frequency hopping is performed or frequencies used in frequency hopping. The hopping pattern is calculated based on a predetermined procedure from a BT device address corresponding to an identification number specific to each BT apparatus and the value of a clock used by each BT apparatus. Obviously, in order for a master and a slave to perform data transmission reciprocally, they must use the same hopping pattern. Therefore, in order for a BT apparatus in a Piconet to establish a radio communications link to another, it must know the BT device address and clock value of the BT apparatus to communicate. For this purpose, each BT apparatus in a Piconet performs communication procedures such as "inquiry" and "paging" to be described later to exchange such pieces of information.

First, in order for a master to communicate with a particular slave, the master identifies slaves which exist in a communication area of the master through "inquiry" processes . Thereafter, the master performs a "paging" process to page the slave to be connected, and performs a process of connecting the two BT apparatuses.

Therefore, when performing communication in the Piconet, the master displays the BT device addresses of the BT apparatus identified through the "inquiry" processes on a display screen, for example. Then, the master must notify the users of the types of apparatus between which the Piconet can be formed.

However, for example, the following problems arise when there is a plurality of printers functioning as slaves in association with a notebook personal computer functioning as a master. When the master displays only the BT device addresses of the slave apparatus, it is difficult for a user to tell which printer specifically corresponds to each slave in the Piconet. The reason is as follows. In most cases, a user knows the manufacturer or features of a printer functioning as a slave as "a printer manufactured by A company" or "a small printer", for example. However, the user rarely knows the BT device address of the slave apparatus. Further, the identification of a BT apparatus to serve as a slave becomes a more difficult problem for a user when slave apparatuses are printers of the same type from the same manufacturer.

For example, when a master is a component stereo amplifier, it may not have a display which can sufficiently display a list of the BT device addresses of the slave apparatus.

It is therefore essential for a user to have some solution in order to visually recognize the BT device addresses of slave apparatuses existing in a Piconet, and specific slave apparatuses in association with the addresses.

From the document "Specification of the Bluetooth System, Profiles V1.0B" the use of a Bluetooth system is known in which a business card from a Push Server can be pulled by a Push Client. The user of the Push Client has to select the business card pull function on the push client resulting in the display of a list of Push Servers that may support the object Push Service. The user has to select a Push Server to pull the business card from in order to receive the desired business card.

### OBJECTS AND SUMMARY OF THE INVENTION

The invention was conceived to solve such problems, and there is provided a BT terminal which allows a user to recognize a particular slave apparatus in a Piconet.

According to the invention, there is provided a master station terminal according to claim 1 used in a radio communications network.

According to the invention, there is further provided a radio communications network according to claim 4.

According to the invention, there is further provided a slave station terminal used in a radio communications network according to claim 5.

### BRIEF EXPLANATION OF THE DRAWINGS

Fig. 1 is a configuration diagram showing a configuration of a Piconet in a first embodiment of the invention;
Fig. 2 is a block diagram showing a configuration of a Bluetooth terminal apparatus in each embodiment of the invention;
Fig. 3 is a flow chart showing operations of a master apparatus in the first embodiment of the invention;
Fig. 4 shows an example of a display screen of the master apparatus in the first embodiment of the invention:
Fig. 5 is a flow chart showing operations of a slave apparatus in the first embodiment of the invention;
Fig. 6 is a configuration diagram showing a configuration of a Piconet in second and third embodiments of the invention;
Fig. 7 is a flow chart showing operations of a master apparatus in the second embodiment of the invention;
Fig. 8 is a flow chart showing operations of a master apparatus as an example, useful for understanding the invention; and
Fig. 9 is a flow chart showing operations of a slave apparatus as an example, useful for understanding the invention.

### DETAILED DESCRIPTION OF THE PREFERRED INVENTIUON

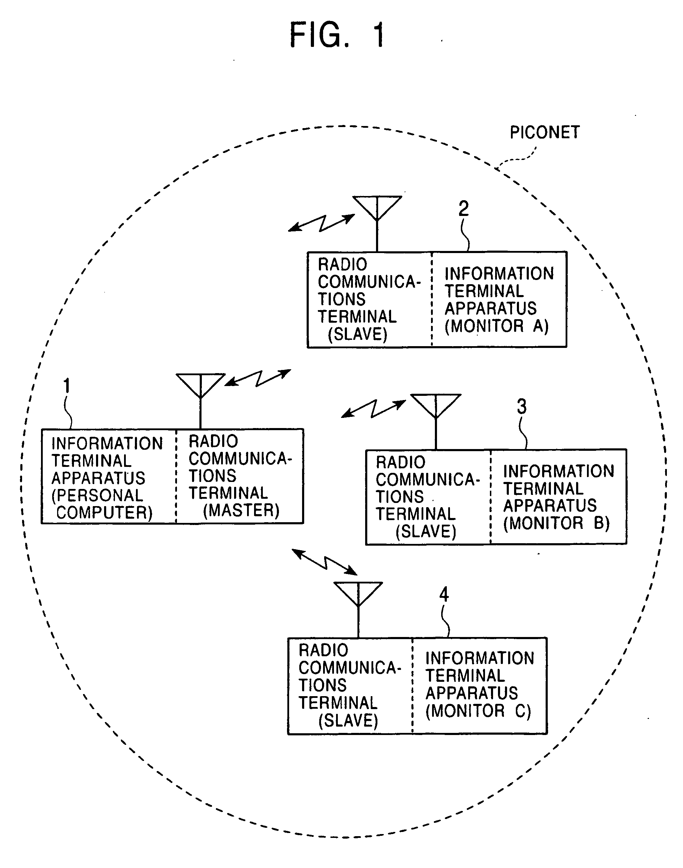

A preferred embodiment of a radio communications network according to the invention is shown in the Piconet configuration diagram in Fig. 1.

The Piconet shown in Fig.1 includes an information terminal apparatus, i.e., a personal computer 1, a monitor apparatus 2, a monitor apparatus 3 and a monitor apparatus 4. The information terminal apparatus correspond to the above-described BT apparatus. Therefore, each apparatus is accompanied by a BT radio communication terminal which performs communication processes between the apparatuses. Such a BT radio communication terminal is primarily comprised of a BT module and a CPU for controlling the same. The information terminal apparatus such as the personal computer 1 and the monitor apparatus 2 are connected to the respective BT modules through application programs of an order higher than a BT protocol stack. The BT protocol stack is a type of OS (Operating Sysyem) in a layered structure that supports communication procedures performed by a BT module to connect to another BT module.

In the present embodiment, the personal computer 1 serves as the master BT apparatus in the Piconet, and the other peripheral apparatus such as the monitor apparatus 2 serve as slave BT apparatus. However, embodiments of the invention are not limited to the configuration in Fig. 1, and the number of apparatuses to serve as slaves may be increased or decreased within a limit of seven in the same Piconet. A BT apparatus other than the personal computer 1 may serve as the master as occasions demand.

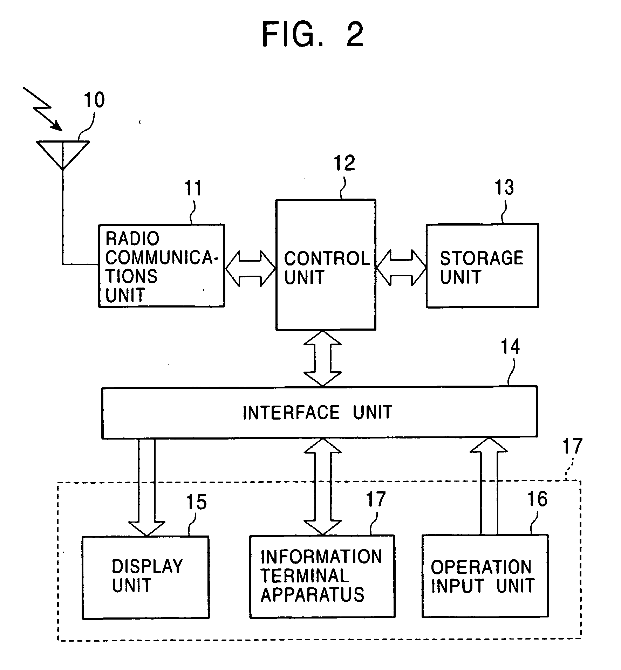

A configuration of a BT apparatus in the Piconet in Fig. 1 is shown in the block diagram in Fig. 2. Since Fig. 2 shows a configuration of a general BT apparatus, the information terminal apparatus in the figure does not put any particular limitation on the invention.

Referring to Fig. 2, an antenna 10 transmits and receives electric waves in the 2.4 GHz frequency band during communication with other BT apparatus in the Piconet.

A radio communication unit 11 is primarily comprised of a general purpose BT module as defined in the BT specification. The BT module is constituted by a high frequency processing unit connected to the antenna 10, a hop frequency calculating unit for performing calculations for frequency hopping, a base band signal processing unit for controlling transmitted packets and radio communications link and for managing processes such as error correction on transmitted signals and security control at communication procedures, a storage unit such as a flash memory for storing various data and a CPU for controlling each of those units comprehensively.

A control unit 12 is primarily constituted by a microcomputer (hereinafter simply referred to as µCPU). The µCPU controls the operation of the BT apparatus shown in Fig. 2 as a whole and controls communication processes between an information terminal apparatus 17 and other BT apparatus present in the Piconet through the BT module.

A storage unit 13 is primarily constituted by memory devices such as a ROM and RAM, and application programs for controlling the operation of the BT apparatus are stored here. The storage unit 13 also includes a so-called non-volatile RAM. For example, data such as the attributes of other BT apparatus to be connected in the Piconet are stored in such a non-volatile RAM.

An interface unit 14 is a unit for connecting the control unit 12 and the information terminal apparatus 17 and so on. For example, a general-purpose interface such as a serial interface, e.g., an RS-232C interface and a parallel interface, e.g., a centronics interface is used by an the interface unit 14 to exchange data between the units.

A display unit 15 is a data display unit utilizing a display such as a liquid crystal display or organic EL (electroluminescence) display and, for example, information such as the BT device addresses of the other BT apparatus present in the Piconet and the attributes of those apparatus is displayed on this unit.

An operation input unit 16 is an operation input unit constituted by a keyboard or ten keys, and a user inputs various data and instructions from this unit.

As shown in the Piconet configuration diagram in Fig. 1, the information terminal apparatus 17 corresponds to a peripheral apparatus such as a personal computer or a monitor apparatus, for example.

In the block diagram of Fig. 2, the display unit 15, the operation input unit 16 and the information terminal apparatus 17 are shown separately. However, when the information terminal apparatus 17 has an information input/output unit such as a display or keyboard, a configuration may be employed in which such unit is substituted for the display unit 15 and the operation input unit 16. The present embodiment is based on an assumption that the BT apparatus to serve as the master is a personal computer and the BT apparatus to serve as slaves are monitor apparatus. Therefore, the following description will be made based on an assumption that a display screen and a keyboard of the personal computer and the monitor apparatus are used as the display unit 15 and the operation input unit 16 of both of the master and the slaves.

Processes and operations of the first embodiment of the invention will now be described based on the flow charts in the accompanying drawings.

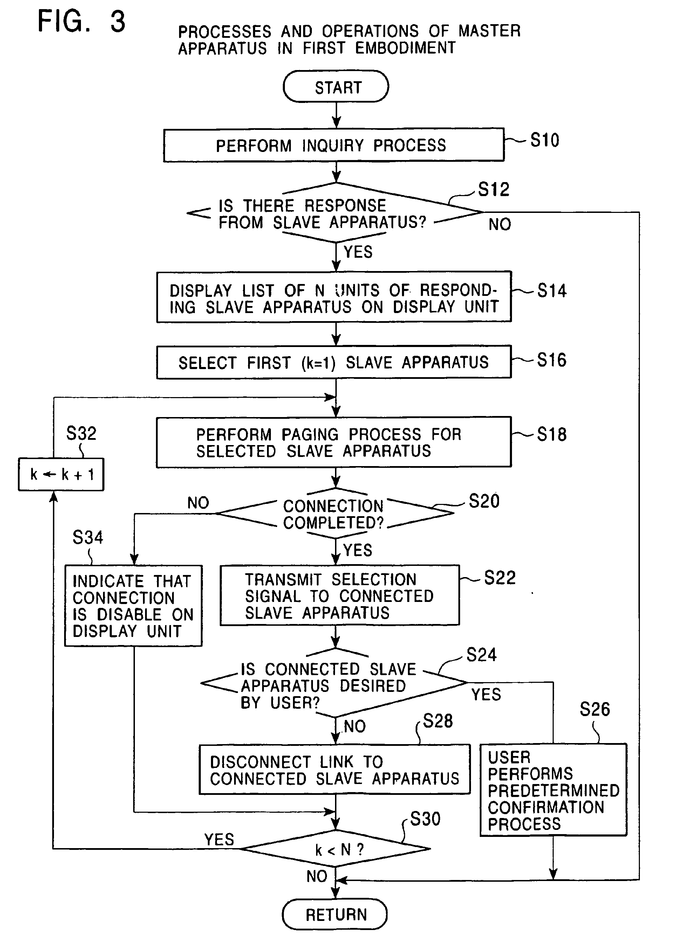

First, processes and operations of the master BT apparatus (personal computer 1) will be described based on the flow chart in Fig. 3.

A processing subroutine shown in the flow chart in Fig. 3 (hereinafter simply referred to as "the subroutine" or "the present subroutine") is one of so-called application programs for the BT module included in the radio communication unit 11. Specifically, the present subroutine is stored in a memory of the storage unit 13 along with a main routine program (not shown) for controlling the BT apparatus shown in Fig. 2 as a whole. The µCPU of the control unit 12 executes the present subroutine step by step at predetermined timing in synchronism with a clock incorporated therein.

Therefore, the user may start the present subroutine by inputting a certain command from the information terminal apparatus 17. Alternatively, it may be started at predetermined timing, for example, at the time of so-called initialization e.g., when the terminal is powered on or reset. In other words, what is required, that the present subroutine is started when the user checks information terminal apparatus to serve as slaves.

When the present subroutine is started, the control unit 12 first commands the radio communication unit 11 to perform "inquiry" processes at step 10.

Upon receipt of such a command, the BT module in the radio communication unit 11 performs the "inquiry" processes in the Piconet shown in Fig. 1.

In this connection, "inquiry" processes in a BT system are a communication procedure performed by the BT apparatus to serve as the master to check what kinds of BT apparatus exist in the neighborhood of the same. That is, the "inquiry" processes are performed by the master apparatus continuously transmitting a broadcast packet to the neighborhood of itself and the other BT apparatus returning information on the apparatus themselves upon receipt of the packet.

Referring to processes at step 10, an "inquiry broadcast" process is first performed to broadcast an IQ packet (broadcast packet) from the master to the neighborhood. The slaves perform an "inquiry scan" process by performing hopping of reception frequencies to receive the IQ packet from the master. The slaves also perform an "inquiry response" process to return an FHS packet that is a response to the received IQ packet to the master.

Therefore, the following description is based on an assumption that the power supplies of the BT apparatus to serve as slaves in the Piconet are on and that the slave apparatus are in a state in which they can perform the "inquiry scan" process or "inquiry response" process.

When the series of "inquiry" processes are completed at step 10, the control unit 12 proceeds to step 12 to judge whether any BT apparatus has responded through the "inquiry response" process.

When it is judged at step 12 that there has been no response from the slave apparatus, the control unit 12 immediately terminates the present subroutine and returns to the main routine.

When it is judged at step 12 that there was response(s) from the other BT apparatus, the control unit 12 proceeds to step 14 to create a list of the BT apparatus from which a response was returned, and to display the list on the display screen of the personal computer 1 that is the information terminal apparatus 17.

Such a list of BT apparatus must be displayed using a method that facilitates understanding of users. Therefore, the control unit 12 may search attribute data (apparatus model numbers, manufacturers, and so on) of information terminal apparatus which can be slave apparatus stored in the storage unit 13 in advance and may display results of the search along with BT device addresses. Further, classified display of those information terminal apparatus may be presented by categorizing them into products such as monitors and printers, for example.

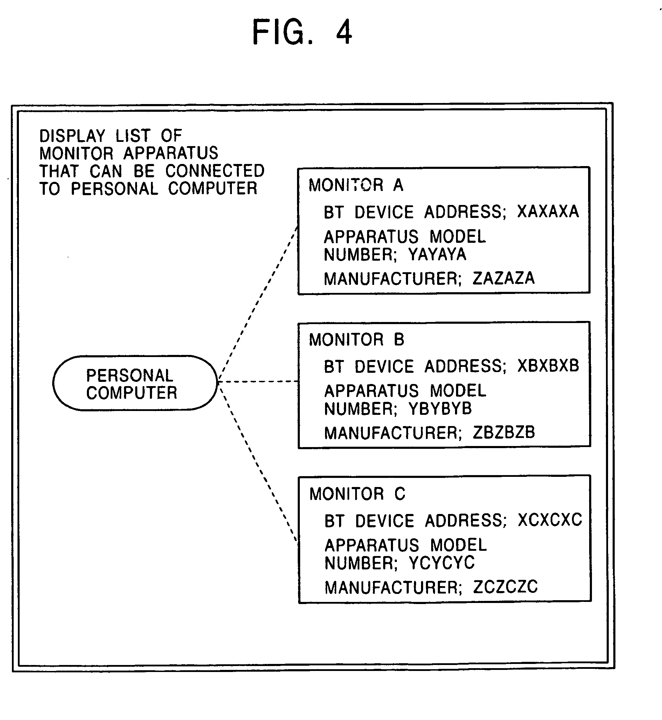

By way of example, such display will be as shown in the configuration diagram of a display screen in Fig. 4. The display screen shows slave apparatus (monitor apparatus 2, 3 and 4 in the present embodiment) that can be connected to the master apparatus (personal computer 1) along with data which are sufficient to identify the names and attributes of the apparatus as well as the BT device addresses thereof.

The user can adequately and quickly recognize the monitor apparatus 2, 3 and 4 that can be connected to the personal computer 1 in the Piconet in Fig. 1 by looking at such a display screen. At this stage, however, it is difficult for the user to judge which monitor apparatus displayed on the screen correspond to specific monitor apparatus from the list of apparatus. Especially, such identification is quite difficult when the monitor apparatuses are of the same type from the same manufacturer.

Therefore, the control unit 12 selects the first monitor apparatus displayed, e.g., the monitor apparatus 2 as a particular slave apparatus at the next step 16. And the control unit 12 sets the value of a slave selection counter k (hereinafter simply referred to as "counter k") at 1. At the next step 18, the control unit 12 commands the BT module in the radio communication unit 11 to perform a process of "paging" the monitor apparatus 2 as a slave, to establish connection of a BT radio communications link to the monitor apparatus 2 thus selected.

"Paging" processes in a BT system are processes performed by the master apparatus to cause a particular slave apparatus present in the Piconet to participate in the Piconet, i.e., processes to connect the same to the master apparatus. In this connection, the "paging" processes primarily include a "page" process performed by the master apparatus, a "page scan" process performed by slave apparatus and a "page response" process mutually performed by the master and slaves.

In order to perform the "paging" processes at step 18, the BT apparatus must be located within a range in which they can communicate with each other. Obviously, the BT modules of the slave apparatus must be capable of performing the processes such as "page scan".

When the series of "paging" processes at step 18 is completed, the control unit 12 proceeds to the next step 20. It judges whether connection to the currently selected slave apparatus that is the monitor apparatus 2 has been completed using a BT radio communications link.

In this connection, when the connection has been completed, the BT modules of both of the master and slave apparatus enter a so-called "communication connection phase". Specifically, a pattern calculated from the BT device address of the master is used as the frequency hopping pattern of both BT modules. The synchronization of time slots on the communications link is established using a BT clock of the master as a reference.

When it is judged that the connection between the two BT apparatus has been properly completed, the control unit 12 proceeds to step 22, to transmit a predetermined selection signal (not shown) to the monitor apparatus 2 using an asynchronous communications link (ACL) that is a type of BT radio communications link, for example.

Upon receipt of the selection signal, the monitor apparatus 2 performs a predetermined response operation in response to the selection signal as will be described later. The user can visually or acoustically recognize the response operation. This allows the user to specifically identify the monitor apparatus to which the currently selected slave apparatus actually corresponds.

The user judges whether the identified monitor apparatus is the desired peripheral apparatus or not (step 24). If it is the desired apparatus, a predetermined confirmation process is performed at step 26.

Referring to the confirmation process, for example, an operation input including an identification code indicating that the monitor apparatus 2 has been identified as a slave apparatus may be provided from the operation input unit of the personal computer 1 that is the master apparatus. Alternatively, a configuration may be employed in which a similar operation input is provided from the operation input unit of the monitor apparatus 2 that is a slave apparatus. The identification code input at the slave apparatus is transmitted to the master through the asynchronous communications link (ACL), for example.

When the control unit 12 recognizes that the confirmation process by the user at step 26 has been completed, it performs a process of identifying the monitor apparatus 2 as a slave apparatus to be connected in the Piconet, and terminates the present subroutine.

When the monitor apparatus 2 is not the peripheral apparatus desired by the user, the user inputs a predetermined command from the operation input unit of the personal computer 1, to break the BT radio communications link to the monitor apparatus 2 (step 28).

When the control unit 12 recognizes such an input command, it proceeds to step 30 to judge whether the value of the counter k described before has reached the number N of all the slave apparatuses that have responded at step 10. If the counter k has not been reached yet the number N, the counter k is incremented at step 32, and the process returns to step 18. As a result, the "paging" processes for the other slave apparatus, i.e., the monitor apparatus 3 and 4, and operations of selecting those slave apparatus are sequentially performed. That is, such processes are repeated until monitor apparatus desired by the user is identified as the slave apparatus.

When the value of the counter k has reached N at step 30, the control unit 12 judges that the check has been completed on all the slave apparatus which has responded and terminates the present subroutine.

When no connection is established as a result of the "paging" processes performed on the selected slave apparatus at step 20, the process proceeds to step 34. The control unit 12 then shows a predetermined display indicating that connection is disabled on the display screen of the personal computer 1. Thereafter, the control unit 12 proceeds to step 30, to perform the process of judging the count value in the counter k in order to perform the "paging" processes for the next slave apparatus.

A description will be made below on processes and operations of the slave apparatuses (monitor apparatus) in association with the operation of the master apparatus (personal computer 1).

The configuration of the slave BT apparatus is the same as that shown in the block diagram of Fig. 2. Therefore, elements that make up the slave BT apparatus will be described using terms such as "control unit 12" and "radio communication unit 11" as in the case of the master. However, it is obvious that the information terminal apparatus 17 is a monitor apparatus instead of a personal computer in the case of a slave apparatus.

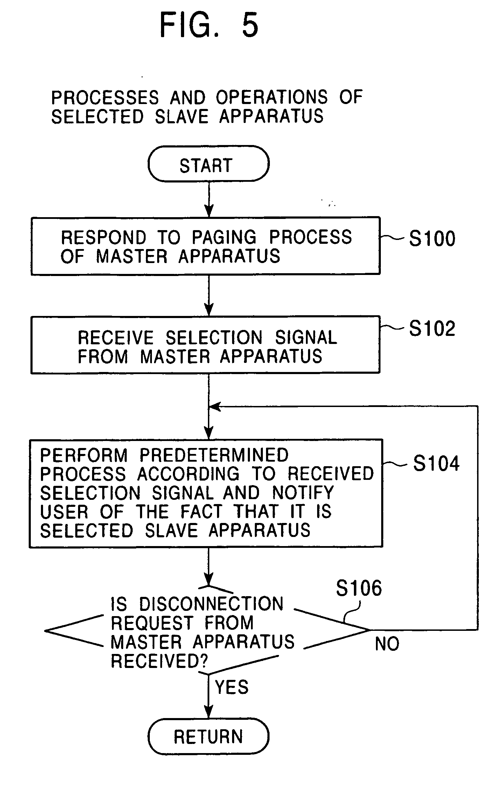

An operational subroutine of a slave is shown in the flow chart in Fig. 5.

The present subroutine is an application program intended for the BT module of the slave like the application program for the master. The subroutine program is stored in a memory of the storage unit 13, along with a main program for controlling the operation of the slave apparatus as a whole. The µCPU of the control unit 12 executes the subroutine program at a predetermined timing in synchronism with the internal clock.

It is assumed that the master has already completed the series of "inquiry" processes for each of the slaves (step 10 in the flow chart of Fig. 3) at a point in time when the present subroutine is started. That is, it is assumed that the slave has already returned an "inquiry response" to the master.

The present subroutine is started when the master performs a process of "paging" the slave. As a result, the control unit 12 performs the processes and operations such as "page scan" and "page response" in response to the "paging" process of the master(step 100).

Subsequently, the control unit 12 receives a selection signal transmitted by the master through the asynchronous communications link at step 102, and then proceeds to the next step 104 to perform a predetermined response process operation for the selection signal.

Such a response process operation is performed to notifying the user of the fact that the slave has been selected by the master using the information terminal apparatus 17 (monitor apparatus). Therefore, such a response process operation may be an operation of displaying a flashing message indicating that the slave has been selected by the master on the display screen of the monitor apparatus, for example. When the monitor apparatus has a display lamp such as an LED, the response process operation may be an operation of blinking the same to notify the user of the fact that the apparatus has been selected.

When the monitor apparatus has a sounding function provided by an electronic buzzer for example, a beep may be issued to notify the user of the fact that the apparatus has been selected. Further, when the monitor apparatus has a speech synthesis output function, some voice message may be output using the same to perform notification. The response process operation may be performed using a configuration in which the plurality of response operations are combined.

The user can specifically know the slave apparatus currently selected by the master by visually or acoustically recognizing such response operations and processes.

When a flashing or inverted display of the BT device address of the selected slave apparatus is presented on the display of the master apparatus , the user can easily understand correspondence between the BT device address and the actual slave apparatus.

Since the selection response operation at step 104 is a notifying operation intended for the user, the operation is repeated until the user performs some confirmation process (for example, an operation of inputting a command requesting disconnection of the slave) after recognizing the same (step 106).

As described with reference to the flow chart for the master shown in Fig. 3, the user at the master or the selected slave performs some input operation through the operation input unit, when the user confirms the slave apparatus selected by the master. When disconnection of the communications link to the selected slave is commanded at such a process, the master requests the slave to disconnect the communications link.

The control unit 12 performs a process of detecting receipt of such a request signal at step 106, and terminates the present subroutine when the disconnection request signal has been received.

A second embodiment of the invention will now be described.

The purpose of the first embodiment is to allow a user to select a desired BT apparatus from among a plurality of BT apparatuses present in a Piconet, and to confirm it specifically. On the contrary, the second embodiment described below is aimed at identification of each BT apparatus present in a Piconet. Specifically, the purpose of the second embodiment is to allow a master to identify a peripheral apparatus which actually corresponds to each of BT apparatus that is recognized by the master based on a BT device address.

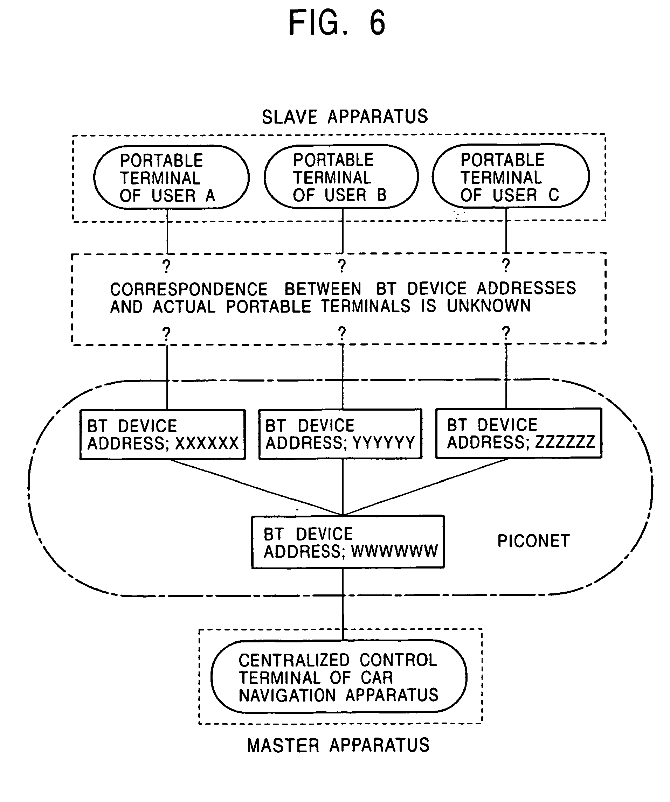

For example, possible applications of this kind, as shown in Fig.6, include a Piconet in which a centralized control terminal of a car navigation apparatus serves as the master apparatus, and in which a plurality of portable terminals that can access such a centralized control terminal serve as slave apparatuses.

Specifically, let us assume that a plurality of users having portable terminals travel in the same car having a car navigation apparatus. Then, the car navigation apparatus that is the master apparatus can communicate with each of the portable terminals using the BT device address of each of the portable terminals acquired through the processes such as "inquiry". However, the car navigation apparatus serving as the master apparatus cannot recognize which portable terminal belongs to which user. As a result, processes according to the second embodiment as described below become necessary.

In the second embodiment, both of the master and slave BT apparatus have the same configuration as that in the first embodiment. Therefore, the description of Fig. 2 for the first embodiment equally applies to the configuration of the BT apparatus. Elements of the apparatus will be described using the same terms as those in Fig. 2 such as "radio communication unit 11" and "control unit 12".

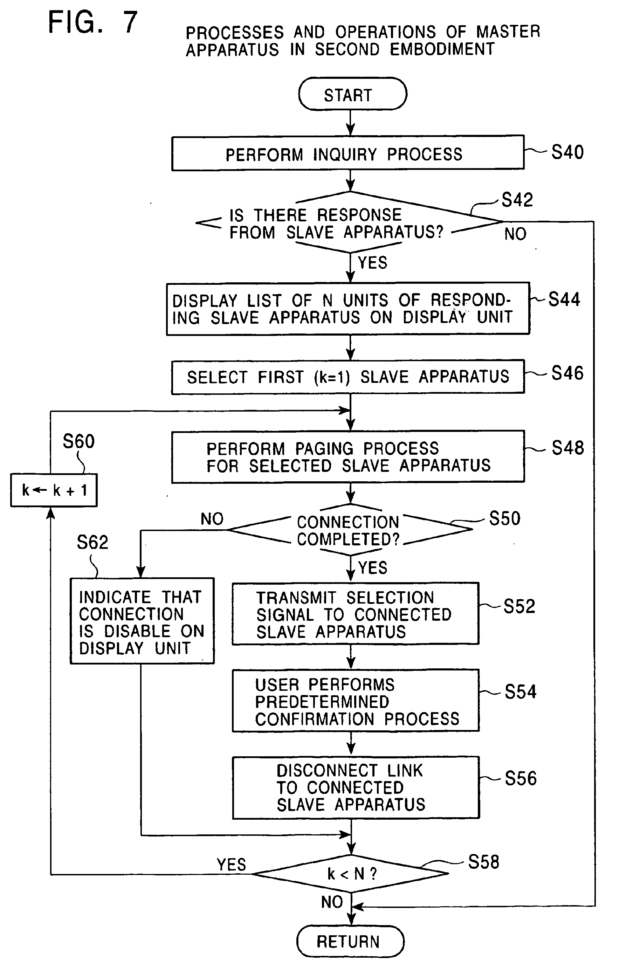

A processing subroutine of the master in the second embodiment is shown in the flow chart of Fig. 7. Processes and operations in the subroutine shown in Fig. 7 are similar to those in the processing subroutine shown in Fig. 3 and, therefore, a detailed description will be made on only parts different from Fig. 3.

In the example described above, the present subroutine may be started when a command is input by the user operating the centralized control terminal of the car navigation apparatus. Alternatively, a configuration may be employed in which the subroutine is automatically started at the time of initialization when the power supply of the car navigation apparatus is turned on.

When the present subroutine is started, the control unit 12 performs a series of processing steps starting with "inquiry" processes (step 40) as shown in Fig. 7. The description will omit processes from the step 40 up to a process of transmitting a selection signal to a slave apparatus for which connection has been completed (step 52), because they are similar to the processes at steps 10 to 22 in Fig. 3.

If we apply the description of the above embodiment here, a portable terminal which has received such a selection signal notifies the user of the portable terminal of the fact that, it has been selected by the master by displaying a message or by a ringing, for example. Alternatively, a configuration may be employed in which the user is notified of the selection by a responding operation such as generating a ringing melody or a vibration.

When the user recognizes such a responding operation of the portable terminal, the user inputs the telephone number of the selected portable terminal(e.g., cellular phone) in the centralized control terminal of the car navigation apparatus, for example (step 54). Thus, the centralized control terminal of the car navigation apparatus serving as the master can recognize the BT device address of the portable terminal selected as a slave apparatus and the telephone number of the portable terminal in association with each other.

Referring to an input operation for a selection confirmation process, a configuration may be employed in which the user performs the same on the slave portable terminal in the same manner as that in the first embodiment. In this case, data such as the telephone number input by the user using ten keys on the portable terminal is transmitted to the master through an ACL link, for example.

When the selection confirmation process is performed by the user, and is recognized by the control unit 12 at step 54, the process proceeds to step 56 at which the control unit 12 performs a process of disconnecting the connection link to the selected slave apparatus (portable terminal).

Processes that follow the disconnection of the connection link to the slave will not be described, because they are similar to those in the flow chart shown in Fig. 3.

Operations and processes of the slave apparatus in the second embodiment will not be described, because a difference from the first embodiment exists only in the operation of responding to a selection by the master.

A further example of a master and slave apparatus pair described.

In the first and second embodiments, a user must perform a confirmation process to identify the device addresses of BT apparatus present in a Piconet and to identify each BT apparatus. On the contrary, in the example described below, a master acquires identification numbers specific to slaves, and automatically identifies device addresses and each BT apparatus using such identification numbers without requiring a user to perform a confirmation process.

For example, such an application is possible when a Piconet is formed by the car navigation apparatus to serve as master apparatus, and the plurality of portable terminals to serve as slave apparatuses, described in the second embodiment.

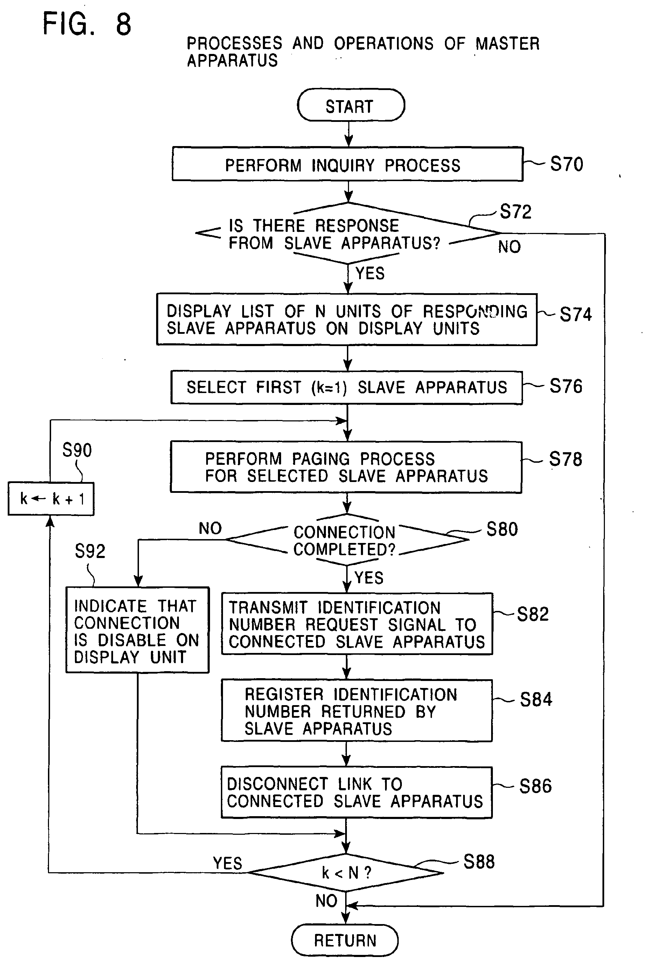

First, an operational subroutine of a master in this example will be described based on the flow chart in Fig. 8. Processes in the subroutine shown in Fig. 8 are similar to those in the subroutine of processes of a master in the second embodiment shown in Fig. 7. Therefore, the following description will refer to parts different from Fig. 7 only.

Both master and slave BT apparatus have same configuration as that in the first and second embodiments shown in Fig. 2.

If the description of the above car navigation apparatus is applied, the present subroutine may be started when a user inputs a command from a car navigation apparatus that is the master apparatus. Alternatively, a configuration may be employed in which the subroutine is automatically started at initialization when the power supply of the car navigation apparatus is turned on.

When the present subroutine is started, the control unit 12 of the master apparatus that is the centralized control terminal of the car navigation apparatus performs a series of processing steps starting with "inquiry" processes (step 70) as shown in Fig. 8.

The description will omit processes from the same processes up to a process of judging completion of connection (step 80), because they are similar to the processes shown in the flow charts in Fig.3 and Fig. 7. In this example, however, the control unit 12 automatically performs the process of identifying slave apparatus without intervention of the user. Therefore, the process of displaying a list of responding slave apparatus shown at step 74 may be omitted. That is, the control unit 12 may store the list of responding slave apparatus in a memory of the storage unit 13 merely as a history of the processes.

When it is judged at step 80 that connection to a selected slave has been properly completed, the control unit 12 proceeds to step 82 at which a signal is transmitted to the slave apparatus for which connection has been completed, the signal requesting an identification number specific to the slave apparatus.

Upon receipt of such a request signal, the slave apparatus selected by the master returns the identification number specific to the slave apparatus to the master using an ACL link in the BT system, for example. Processes at the slave will be described later.

The "identification number specific to the slave apparatus" is a certain identification code belonging to the slave apparatus only, and may be any number as long as it is well known as representing the slave apparatus. In this example, since a portable terminal(e.g., cellular phone) is referred to as the slave apparatus, the telephone number of the portable terminal may be used as the identification number, for example.

However, the identification number in this example is not limited to numerical codes such as a telephone number. For example, when the portable terminal as the slave apparatus belongs to the father or mother of the user, a character code such as "father" or "mother" may be used as the identification number specific to the same.

When the identification number is acquired from the slave through the radio communication unit 11, the control unit 12 proceeds to step 84, to register the identification number in a memory of the storage unit 13 in association with the BT address of the slave apparatus.

With such a process, the user is not required to pay attention to the BT device address of the slave in selecting the slave apparatus during subsequent communication processes in the Piconet. That is, the user can select the slave apparatus using the registered identification number. When there is communication from the slave apparatus, the identification number as a code representing the slave apparatus is displayed on the display of the car navigation apparatus as the master apparatus.

When the process at step 84 is completed, the control unit 12 proceeds to the next step 86 to disconnect the communications link to the connected slave apparatus. Thereafter, the control unit 12 performs similar processes of requesting an identification number, and registering the identification number for the rest of the plurality of slave apparatuses.

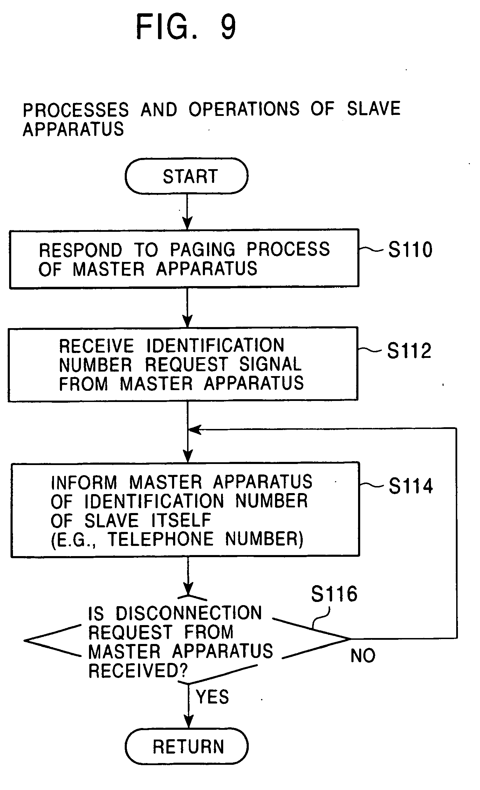

Operations and processes of the slave apparatus in this example will now be described based on the flow chart shown in Fig. 9.

It is assumed that processes at the slave are activated only when "inquiry" processes between the master and the slave have been completed and, the slave has returned a response to the master just as in the first and second embodiments. The subroutine in Fig. 9 is started by a "paging" process performed by the master (step 78 in Fig. 8).

In the subroutine in Fig. 9, the control unit 12 of the slave apparatus (portable terminal) performs a responding operation in response to the "paging" process performed by the master through the radio communication unit 11 (step 110).

When an identification number request signal is thereafter received from the master through the BT communications link (step 112), the control unit 12 reads out the identification number stored in advance in the memory of the storage unit 13, and informs the master of the same (step 114).

The identification number is only required to be an identification code that is well known by the users and, for example, a configuration may be employed in which the telephone number of the portable terminal(e.g., cellular phone) as the slave apparatus is used as described before. Alternatively, a configuration may be employed in which a character code or the like that can be easily recognized by the users is used.

After informing the master of the identification number, the control unit 12 proceeds to step 116 at which it detects reception of a signal from the master requesting disconnection of the communications link, and terminates the present subroutine when the disconnection request is received.

According to the example, even in a situation in which it is difficult to identify a plurality of slave apparatus as shown in Fig. 6, no user intervention is required in identifying the slaves. Specifically, each of the slaves automatically returns the identification number of the slave in response to a request from the master without requiring the user to perform a confirmation input operation in accordance with the responding operation of the slave apparatus. This allows the master to identify each of the slaves.

The implementation of the invention is not limited to the first and second embodiment described above. For example, in each of the above embodiments, the master performs the "paging" process in selecting a slave which has responded in the "inquiry" process. Alternatively, a configuration may be employed in which the master performs the "paging" process in advance for all slaves which have responded, and thereafter transmits a selection signal or request signal to each slave.

According to the invention, each of slave apparatus forming a Piconet can be identified using a display or sound. This allows a user to quickly and easily select a desired slave apparatus even when a plurality of slave apparatus of the same type exist in the Piconet.

When each of the slave apparatus has an identification number, e.g., a telephone number that is specific to the apparatus and well known by users, the number can be automatically registered at the master in association with the BT device address of the apparatus. This allows a user to identify a slave apparatus in a Piconet using such an identification number, thereby making it possible to improve the convenience of a BT communications system significantly.

It is understood that the foregoing description and accompanying drawings set forth the preferred embodiments of the invention at the present time. Thus, it should be appreciated that the invention is not limited to the disclosed embodiments but may be practiced within the full scope of the appended claims.

## Claims

1. A master station terminal (1) used in a radio communications network in which one master station terminal (1) and a plurality of slave station terminals (2, 3, 4) communicate with each other, comprising:
a radio communications part (11) configured to detect the plurality of slave station terminals (2, 3, 4) present in the radio communications network, and to communicate with the slave station terminals (2, 3, 4); and
a control part (12) configured to generate a selection signal selecting one of the slave station terminals detected by the radio communications part (11), and to transmit the selection signal to the detected slave station terminal through the radio communications part (11);
**characterized by** an operation input part (16) configured to accept an operation input of a slave station terminal identification command including a first identifier that identifies each slave station terminal (2, 3, 4),
wherein the control part (12) is configured to associate the first identifier with an address specific to the slave station terminal selected by the selection signal in the radio communication network.

2. A master station terminal (1) according to Claim 1, **characterized in that** the radio communications part (11) is configured to receive a slave station terminal identification command returned from the slave station terminal selected by the selection signal, and
the control part (12) is configured to associate a second identifier included in the slave station terminal identification command that identifies each slave station terminal (2, 3, 4) with an address specific to the slave station terminal selected by the selection signal in the radio communication network.

3. A master station terminal (1) according to Claim 1, **characterized in that** a Bluetooth radio communications system is used as the radio communications network, and a Bluetooth terminal module is used as the radio communications part (11).

4. A radio communications network comprising a master station terminal (1) according to claim 1 and a plurality of slave station terminals (2, 3, 4) in which the master station terminal (1) according to claim 1 and the plurality of slave station terminals (2, 3, 4) communicate with each other, at least one of the plurality of slave station terminals comprises:
a radio communications part (11) configured to communicate with the one master station terminal (1) present in the radio communications network; and
a control part (12) configured to recognize a selection signal intended for the slave station terminal received from the master station terminal (1) through the radio communications part (11),
**characterized by** a selection notifying part (15, 17) configured to perform a notifying operation based on the selection signal,
wherein the selection notifying part has at least one of a display function and sound function, and is configured to perform at least one of a display process and sound process in accordance with the selection signal as the notifying operation.

5. A slave station terminal (2, 3, 4) used in a radio communications network in which one master station terminal (1)
and a plurality of slave station terminals (2, 3, 4) communicate with each other, comprising:
a radio communications part (11) configured to communicate with the one master station terminal (1) present in the radio communications network; and
a control part (12) configured to recognize a selection signal intended for the slave station terminal received from the master station terminal (1) through the radio communications part (11),
**characterized in that** said each slave station terminal further includes:
a selection notifying part (15,17) configured to perform a notifying operation based on the selection signal, wherein the selection notifying part has at least one of a display function and sound function, and is configured to perform at least one of a display process and sound process in accordance with the selection signal as the notifying operation; and
an operation input part (16) configured to accept an operation input of a slave station terminal identification command that identifies the a slave station terminal (2, 3, 4), said slave station terminal identification command including a second identifier except an address specific to the slave station terminal in the radio communication network,
wherein the control part (12) is configured to cause the radio communications part (11) to transmit the slave station terminal identification command including the second identifier to the master station terminal (1).

6. A slave station terminal (2, 3, 4) according to Claim 4 or 5, **characterized in that** a Bluetooth radio communications system is used as the radio communications network, and a Bluetooth terminal module is used as the radio communications part (11).

## Patentansprüche

1. Master-Stationsendgerät (1), das in einem Funkkommunikationsnetzwerk verwendet wird, in dem ein Master-Stationsendgerät (1) und mehrere Slave-Stationsendgeräte (2, 3, 4) miteinander kommunizieren, umfassend:
einen Funkkommunikationsteil (11), der ausgestaltet ist, um die mehreren Slave-Stationsendgeräte (2, 3, 4) zu detektieren, die in dem Funkkommunikationsnetzwerk vorhanden sind, und um mit den Slave-Stationsendgeräten (2, 3, 4) zu kommunizieren; und
einen Steuerteil (12), der ausgestaltet ist, um ein Auswahlsignal zu erzeugen, das eines der durch den Funkkommunikationsteil (11) detektierten Slave-Stationsendgeräte auswählt, und um das Auswahlsignal über den Funkkommunikationsteil (11) an das detektierte Slave-Stationsendgerät zu senden,
**gekennzeichnet durch** einen Operationseingabeteil (16), der ausgestaltet ist, um eine Operationseingabe eines Slave-Stationsendgerät-Identifikationsbefehls anzunehmen, der einen ersten Identifikator umfasst, der jedes Slave-Stationsendgerät (2, 3, 4) identifiziert, wobei der Steuerteil (12) ausgestaltet ist, um den ersten Identifikator einer Adresse zuzuordnen, die für das **durch** das Auswahlsignal in dem Funkkommunikationsnetzwerk ausgewählte Slave-Stationsendgerät spezifisch ist.

2. Master-Stationsendgerät (1) nach Anspruch 1, **dadurch gekennzeichnet, dass**
der Funkkommunikationsteil (11) ausgestaltet ist, um einen Slave-Stationsendgerät-Identifikationsbefehl zu empfangen, der von dem durch das Auswahlsignal ausgewählte Slave-Stationsendgerät zurückgegeben wird, und
der Steuerteil (12) ausgestaltet ist, um einen zweiten Identifikator, der in dem Slave-Stationsendgerät-Identifikationsbefehl umfasst ist und jedes Slave-Stationsendgerät (2, 3, 4) identifiziert, einer Adresse zuzuordnen, die für das durch das Auswahlsignal in dem Funkkommunikationsnetz ausgewählte Slave-Stationsendgerät spezifisch ist.

3. Master-Stationsendgerät (1) nach Anspruch 1, **dadurch gekennzeichnet, dass** ein Bluetooth-Funkkommunikationssystem als das Funkkommunikationsnetzwerk verwendet wird, und ein Bluetooth-Endgerätmodul als der Funkkommunikationsteil (11) verwendet wird.

4. Funkkommunikationsnetzwerk, umfassend ein Master-Stationsendgerät (1) nach Anspruch 1 und mehrere Slave-Stationsendgeräte (2, 3, 4), wobei das Master-Stationsendgerät (1) nach Anspruch 1 und die mehreren Slave-Stationsendgeräte (2, 3, 4) miteinander kommunizieren, wobei mindestens eines der mehreren Slave-Stationsendgeräte umfasst:
einen Funkkommunikationsteil (11), der ausgestaltet ist, um mit einem Master-Stationsendgerät (1) zu kommunizieren, das in dem Funkkommunikationsnetzwerk vorhanden ist; und
einen Steuerteil (12), der ausgestaltet ist, um ein Auswahlsignal zu erkennen, das für das Slave-Stationsendgerät vorgesehen ist und von dem Master-Stationsendgerät (1) über den Funkkommunikationsteil (11) empfangen wird,
**gekennzeichnet durch** einen Auswahlbenachrichtigungsteil (15, 17), der ausgestaltet ist, um auf der Grundlage des Auswahlsignals eine Benachrichtigungsoperation auszuführen,
wobei der Auswahlbenachrichtigungsteil eine Anzeigefunktion und/oder eine Tonfunktion aufweist und ausgestaltet ist, um einen Anzeigeprozess und/oder einen Tonprozess gemäß dem Auswahlsignal als die Benachrichtigungsoperation auszuführen.

5. Slave-Stationsendgerät (2, 3, 4), das in einem Funkkommunikationsnetzwerk verwendet wird, in dem ein Master-Stationsendgerät (1) und mehrere Slave-Stationsendgeräte (2, 3, 4) miteinander kommunizieren, umfassend:
einen Funkkommunikationsteil (11), der ausgestaltet ist, um mit dem einen Master-Stationsendgerät (1) zu kommunizieren, das in dem Funkkommunikationsnetzwerk vorhanden ist; und
einen Steuerteil (12), der ausgestaltet ist, um ein Auswahlsignal zu erkennen, das für das Slave-Stationsendgerät vorgesehen ist und von dem Master-Stationsendgerät (1) über den Funkkommunikationsteil (11) empfangen wird,
**dadurch gekennzeichnet, dass** jedes Slave-Stationsendgerät ferner umfasst:
einen Auswahlbenachrichtigungsteil (15, 17), der ausgestaltet ist, um auf der Grundlage des Auswahlsignals eine Benachrichtigungsoperation auszuführen, wobei der Auswahlbenachrichtigungsteil eine Anzeigefunktion und/oder eine Tonfunktion aufweist und ausgestaltet ist, um einen Anzeigeprozess und/oder einen Tonprozess gemäß dem Auswahlsignal als die Benachrichtigungsoperation auszuführen; und
einen Operationseingabeteil (16), der ausgestaltet ist, um eine Operationseingabe eines Slave-Stationsendgerät-Identifikationsbefehls anzunehmen, der das Slave-Stationsendgerät (2, 3, 4) identifiziert, wobei der Slave-Stationsendgerät-Identifikationsbefehl einen zweiten Identifikator außer einer Adresse umfasst, die für das Slave-Stationsendgerät in dem Funkkommunikationsnetzwerk spezifisch ist,
wobei der Steuerteil (12) ausgestaltet ist, um zu bewirken, dass der Funkkommunikationsteil (11) den Slave-Stationsendgerät-Identifikationsbefehl, der den zweiten Identifikator umfasst, an das Master-Stationsendgerät (1) überträgt.

6. Slave-Stationsendgerät (2, 3, 4) nach Anspruch 4 oder 5, **dadurch gekennzeichnet, dass** ein Bluetooth-Funkkommunikationssystem als das Funkkommunikationsnetzwerk verwendet wird und ein Bluetooth-Endgerätmodul als der Funkkommunikationsteil (11) verwendet wird.

## Revendications

1. Terminal de station maître (1) utilisé dans un réseau de communications radio dans lequel un terminal de station maître (1) et une pluralité de terminaux de stations esclaves (2, 3, 4) communiquent les uns avec les autres, comprenant :
une partie de communications radio (11) configurée pour détecter la pluralité de terminaux de stations esclaves (2, 3, 4) présents dans le réseau de communications radio, et pour communiquer avec les terminaux de stations esclaves (2, 3, 4) ; et
une partie de commande (12) configurée pour générer un signal de sélection qui sélectionne l'un des terminaux de stations esclaves détecté par la partie de communications radio (11), et pour transmettre le signal de sélection au terminal de station esclave détectée via la partie de communications radio (11),
**caractérisé par** une partie d'entrée d'opération (16) configurée pour accepter une entrée d'opération d'un ordre d'identification de terminal de station esclave qui inclut un premier identificateur qui identifie chaque terminal de station esclave (2, 3, 4),
dans laquelle la partie de commande (12) est configurée pour associer le premier identificateur avec une adresse spécifique du terminal de station esclave sélectionné par le signal de sélection dans le réseau de communications radio.

2. Terminal de station maître (1) selon la revendication 1,
**caractérisé en ce que** la partie de communications radio (11) est configurée pour recevoir un ordre d'identification de terminal de station esclave renvoyé depuis le terminal de station esclave sélectionné par le signal de sélection, et
la partie de commande (12) est configurée pour associer un second identificateur inclus dans l'ordre d'identification de terminal de station esclave qui identifie chaque terminal de station esclave (2, 3, 4) avec une adresse spécifique du terminal de station esclave sélectionné par le signal de sélection dans le réseau de communications radio.

3. Terminal de station maître (1) selon la revendication 1, **caractérisé en ce qu'**un système de communications radio Bluetooth est utilisé à titre de réseau de communications radio, et un module de terminal Bluetooth est utilisé à titre de partie de communications radio (11).

4. Réseau de communications radio comprenant un terminal de station maître (1) selon la revendication 1 et une pluralité de terminaux de stations esclaves (2, 3, 4), dans lequel le terminal de station maître (1) selon la revendication 1 et la pluralité de terminaux de stations esclaves (2, 3, 4) communiquent les uns avec les autres, l'un au moins de la pluralité de terminaux de stations esclaves comprenant :
une partie de communications radio (11) configurée pour communiquer avec le terminal de station maître (1) présent dans le réseau de communications radio ; et
une partie de commande (12) configurée pour reconnaître un signal de sélection destiné au terminal de station esclave reçu depuis le terminal de station maître (1) via la partie de communications radio (11),
**caractérisé par** une partie de notification de sélection (15, 17) configurée pour exécuter une opération de notification en se basant sur le signal de sélection,
dans lequel la partie de notification de sélection présente une fonction au moins parmi une fonction d'affichage et une fonction sonore, et est configurée pour exécuter au moins un processus parmi un processus d'affichage et un processus sonore en accord avec le signal de sélection, à titre d'opération de notification.

5. Terminal de station esclave (2, 3, 4) utilisé dans un réseau de communications radio dans lequel un terminal de station maître (1) et une pluralité de terminaux de stations esclaves (2, 3, 4) communiquent les uns avec les autres, comprenant :
une partie de communications radio (11) configurée pour communiquer avec le terminal de station maître (1) présent dans le réseau de communications radio ; et
une partie de commande (12) configurée pour reconnaître un signal de sélection destiné au terminal de station esclave reçu depuis le terminal de station maître (1) via la partie de communications radio (11),
**caractérisé en ce que** chaque terminal de station esclave inclut encore :
une partie de notification de sélection (15, 17) configurée pour exécuter une opération de notification en se basant sur le signal de sélection, dans laquelle la partie de notification de sélection possède au moins une fonction parmi une fonction d'affichage et une fonction sonore, et est configurée pour exécuter au moins un processus parmi un processus d'affichage et un processus sonore en accord avec le signal de sélection à titre d'opération de notification ; et
une partie d'entrée d'opération (16) configurée pour accepter une entrée d'opération d'un ordre d'identification de terminal de station esclave qui identifie le terminal de station esclave (2, 3, 4), ledit ordre d'identification de terminal de station esclave incluant un second identificateur autre qu'une adresse spécifique au terminal de station esclave dans le réseau de communications radio,
dans lequel la partie de commande (12) est configurée pour amener la partie de communications radio (11) à transmettre l'ordre d'identification de terminal de station esclave qui inclut le second identificateur au terminal de station maître (1).

6. Terminal de station esclave (2, 3, 4) selon la revendication 4 ou 5, **caractérisé en ce qu'**un système de communications radio Bluetooth est utilisé à titre de réseau de communication radio, et un module de terminal Bluetooth est utilisé à titre de partie de communications radio (11).
